# EUROPEAN PATENT APPLICATION

(11) **EP 4 852 282 A1**
(43) Date of publication of application: **09.12.2026**
(21) Application number: 26182221.7
(22) Date of filing: 01.06.2026
(51) Int. Cl.: H02K 3/18

(54) **MOTOR COIL, MOTOR, AND STRADDLE TYPE VEHICLE INCLUDING SAME**

(30) Priority: 04.06.2025 JP 2025093496
(71) Applicant: Yamaha Hatsudoki Kabushiki Kaisha, Iwata-shi, Shizuoka 438-8501 (JP)
(72) Inventor: Otaki, Ryota, Iwata-shi, Shizuoka 4388501 (JP)
(74) Representative: Grünecker Patent- und Rechtsanwälte PartG mbB

(57) **Abstract**

A motor coil (23) including a winding wire (26) wound edgewise, in which the winding wire (26) has a plurality of rectangular cross-sections that vary depending on a cutting position, and the winding wire (26) has a first layer and a second layer (62) covering the first layer.

## Description

The present invention relates to a motor coil, a motor, and a straddle type vehicle including the same.

Prior art document JP 2020-178457 A describes a motor improved to have a higher output than a conventional motor. Each coil constituting the motor is formed by winding a rectangular wire having a rectangular cross-section edgewise. The edgewise winding is a method of winding a rectangular wire by bending the rectangular wire in the short-side direction of the cross-section.

However, the motor having the conventional configuration is not sufficiently optimized in the configuration of the coil. In order to further improve the output of the motor, it is necessary to increase the occupancy rate of the coil in the cross-section of the motor. For this purpose, the cross-sectional shape of the rectangular wire may be made variable in order to increase the space factor of the coil while suppressing the electric resistance of the entire motor coil. That is, the rectangular wire may be gradually flattened.

However, when the rectangular wire is flattened, edgewise winding becomes difficult.

It is the object of the present invention to provide a motor coil that can be easily manufactured and constitute a high-output motor by facilitating edgewise winding, a high-output motor, and a high-output straddle type vehicle.

According to the present invention said object is solved by a motor coil having the features of independent claim 1. Preferred embodiments are laid down in the dependent claims.

In consideration of the teaching of the present invention it is provided a motor coil including
a winding wire wound edgewise, wherein
the winding wire has a plurality of rectangular cross-sections that vary depending on a cutting position, and
the winding wire has a first layer and a second layer covering the first layer.

### [Operation and Effect]

The motor coil described above includes a winding wire wound edgewise, the winding wire has a plurality of rectangular cross-sections that vary depending on a cutting position, and the winding wire has a first layer and a second layer covering the first layer. With this configuration, it is not necessary to constitute the motor coil from a winding wire having a single-layer structure, and the motor coil can be manufactured without excessively flattening the shape of the winding wire when the winding wire is wound edgewise. Therefore, according to the present teaching, a motor coil that is easy to manufacture can be provided by facilitating edgewise winding.

Preferably, in the motor coil described above,
a width of the motor coil gradually increases as the motor coil extends.

### [Operation and Effect]

With the above configuration, the width of the motor coil gradually increases as the motor coil extends. With this configuration, in a motor, the motor coil can be easily accommodated in an arrangement space of the motor coil having a fan-shaped cross-section with a high occupancy rate.

Preferably, the motor coil described above extends along a coil central axis, and
a length of the winding wire in a direction of the coil central axis gradually decreases as the motor coil extends.

### [Operation and Effect]

With the above configuration, the length of the winding wire in the direction of the central axis gradually decreases as the motor coil extends. With this configuration, the winding wire can be set to be gradually thinner. As described above, according to the present configuration, it is easy to wind the winding wire edgewise with the rectangular cross-sectional shape being variable.

Preferably, in the motor coil described above,
lengths of long sides of the rectangular cross-sections in the second layer gradually increase as the motor coil extends.

### [Operation and Effect]

With the above configuration, the lengths of the long sides of the cross-sections in the second layer gradually increase as the motor coil extends. With this configuration, it is easy to wind the winding wire edgewise with the rectangular cross-sectional shape being variable.

Preferably, in the motor coil described above,
the winding wire is seamless.

### [Operation and Effect]

With the above configuration, the winding wire is seamless. With this configuration, the motor coil that is easy to manufacture can be provided.

Preferably, in the motor coil described above,
a cross-sectional area of the winding wire has a predetermined number through the first layer and the second layer.

### [Operation and Effect]

With the above configuration, the cross-sectional area of the winding wire has a predetermined number through the first layer and the second layer. With this configuration, the electric resistance of the entire motor coil is reduced, and a high-output motor can be obtained.

Preferably, in the motor coil described above,
the winding wire is positioned outside a hollow quadrangular prism.

### [Operation and Effect]

With the above configuration, the winding wire is located outside the hollow quadrangular prism. With this configuration, the motor coil can be easily attached to an iron core of the quadrangular prism included in the motor.

Preferably, in the motor coil described above,
the first layer includes a single layer portion that is exposed and a covered portion covered with the second layer.

### [Operation and Effect]

With the above configuration, the first layer includes the exposed single layer portion and the covered portion covered with the second layer. With this configuration, the width of the motor coil can be greatly changed depending on the part of the motor coil. That is, the width of the motor coil can be further increased by providing a multilayer portion, and thus, the motor coil according to the present teaching can be applied to more motors.

Preferably, in the motor coil described above,
the rectangular cross-sections are identical in shape in the covered portion, and
a width of the covered portion from the first layer to the second layer is constant.

### [Operation and Effect]

With the above configuration, the rectangular cross-sections are identical in shape in the covered portion, and the width from the first layer to the second layer in the covered portion is constant. With this configuration, the second layer is wound around the flat covered portion when the second layer is wound so as to overlap the covered portion, so that the manufacturing of the second layer is facilitated. With this configuration, the motor coil having a simple configuration and easy to manufacture can be provided.

Preferably, in the motor coil described above,
the single layer portion forms a first inclined surface inclined with respect to a coil central axis, and
the second layer forms a second inclined surface flush with the first inclined surface.

### [Operation and Effect]

With the above configuration, the single layer portion forms the first inclined surface inclined with respect to the coil central axis, and the second layer forms the second inclined surface flush with the first inclined surface. With this configuration, it is possible to provide a motor coil that looks as if the winding wire is apparently wound in the same manner, although the motor coil has the single layer portion having only the first layer and a portion having the second layer on the first layer. As a result, it is possible to achieve a configuration equivalent to a motor coil constituted by a single layer, although the configuration also has the second layer.

A motor according to the present teaching includes:
an output shaft;
teeth surrounding the output shaft; and
a motor coil attached to each of the teeth, wherein
the motor coil includes a winding wire wound edgewise,
the winding wire includes a first layer and a second layer covering the first layer, and
the winding wire has a plurality of rectangular cross-sections that vary depending on a cutting position.

### [Operation and Effect]

With the above configuration, the motor includes an output shaft, teeth surrounding the output shaft, and a motor coil attached to each of the teeth, wherein the motor coil includes a winding wire wound edgewise, the winding wire includes a first layer and a second layer covering the first layer, and the winding wire has a plurality of rectangular cross-sections that vary depending on a cutting position. As described above, the present teaching is easily applied to a motor including the output shaft, the teeth surrounding the output shaft, and the motor coil attached to each of the teeth. Therefore, according to the present teaching, a motor that is easy to manufacture can be provided by facilitating edgewise winding.

Preferably, the motor described above further includes
a rotor provided at a position between the output shaft and the teeth, wherein
the rotor includes
a rotor core fixed to the output shaft and
a magnet held by the rotor core, and
the teeth constitute a stator.

### [Operation and Effect]

With the above configuration, the motor further includes a rotor provided at a position between the output shaft and the teeth, wherein the rotor includes a rotor core fixed to the output shaft and a magnet held by the rotor core, and the teeth constitute a stator. As described above, the present teaching can be applied to a motor having teeth as a stator. That is, according to the present teaching, a stator that is easy to manufacture can be provided by facilitating edgewise winding.

Preferably, in the motor described above,
the teeth form a space that has a fan shape extending outward from the output shaft in plan view, and
the motor coil extends outward from the output shaft in accordance with the shape of the space.

### [Operation and Effect]

With the above configuration, the teeth form a space that has a fan shape extending outward from the output shaft in plan view, and the motor coil extends outward from the output shaft in accordance with the shape of the space. With this configuration, the motor can be configured to have a high occupancy rate in the space and a high output.

The present specification also discloses a straddle type vehicle including the above-described motor. According to the present teaching, it is possible to provide a straddle type vehicle that has a high output and is easy to manufacture.

The motor coil according to the present teaching is suitable for a high-output motor.

### Brief description of the drawings

Fig. 1 is a right side view for describing an overall configuration of a motorcycle according to an embodiment.
Fig. 2 is a perspective view for describing a motor according to the embodiment.
Fig. 3 is an exploded perspective view of the motor according to the embodiment.
Fig. 4 is a plan view for describing a disk according to the embodiment.
Fig. 5 is a cross-sectional view for describing a motor coil according to the embodiment.
Fig. 6 is a cross-sectional view for describing the motor coil according to the embodiment.
Fig. 7 is a cross-sectional perspective view for describing the motor coil according to the embodiment.
Fig. 8 is a cross-sectional perspective view for describing the motor coil according to the embodiment.
Fig. 9 is a cross-sectional view for describing the motor coil according to the embodiment.
Fig. 10 is a cross-sectional view for describing the motor coil according to the embodiment.
Fig. 11 is a cross-sectional view for describing an inclined surface according to the embodiment.

### Description of the preferred embodiments

Hereinafter, a motorcycle, a motor, and a motor coil according to the present teaching will be described with reference to the drawings. The motorcycle corresponds to a straddle type vehicle of the present teaching. The present teaching can also be applied to other types of straddle type vehicles such as tricycles. The motorcycle according to the present teaching particularly relates to a straddle type electric vehicle. A motor coil according to the present teaching includes a winding wire wound edgewise. The winding wire has a plurality of rectangular cross-sections that vary depending on a cutting position.

### Embodiment 1

### <1. Schematic configuration of motorcycle>

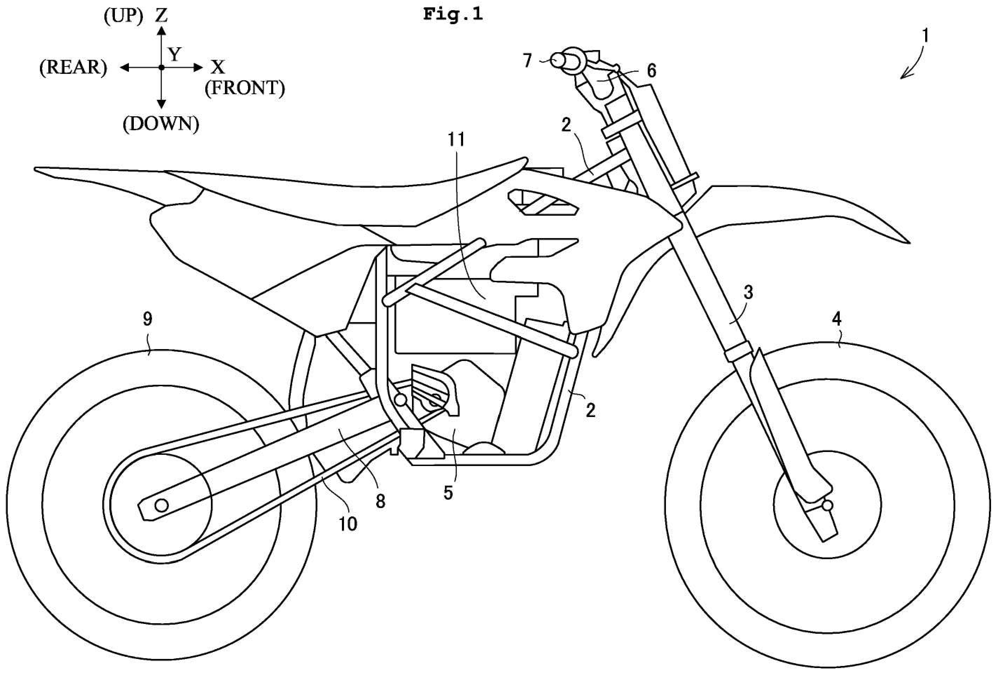

Fig. 1 is a right side view of a motorcycle 1 according to an embodiment. In Fig. 1, the front-rear direction X and the up-down direction Z of the motorcycle 1 are defined based on a driver riding on the motorcycle. The front-rear direction X and the width direction Y are orthogonal to each other and extend in the horizontal direction. The up-down direction Z is along the vertical axis and is orthogonal to both the front-rear direction X and the width direction Y. Fig. 1 illustrates front, rear, up, down, right, and left for reference.

The motorcycle 1 is classified, for example, as an off-road vehicle. The off-road vehicle is suitable for traveling on an uneven ground.

A vehicle body frame 2 is a structure of the motorcycle 1, and supports a drive system such as a motor 5.

A front fork 3 is supported by the vehicle body frame 2. The front fork 3 extends forward and downward from the vehicle body frame 2. The front fork 3 can turn with respect to the vehicle body frame 2.

A front wheel 4 is rotatably supported by the front fork 3.

The motor 5 gives propulsion to the motorcycle 1. The motor 5 is fixed to the vehicle body frame 2. The structure of the motor 5 will be described later. As the motor 5 in the present embodiment, an AC motor, for example, can be applied.

A handlebar 6 is a grip held by the driver, and is operated when the driver turns the front fork 3 with respect to the vehicle body frame 2. The handlebar 6 is attached to an upper portion of the front fork 3. A right end portion of the handlebar 6 is a throttle grip 7. The throttle grip 7 is a portion operated by the driver to adjust the output of the motor 5.

A swing arm 8 is supported by the vehicle body frame 2. The swing arm 8 is swingable with respect to the vehicle body frame 2. The swing arm 8 extends rearward from the vehicle body frame 2.

A rear wheel 9 is provided behind the swing arm 8. The rear wheel 9 is driven by the rotation of the motor 5.

A power transmission mechanism 10 transmits the rotational force of the motor 5 to the rear wheel 9. The power transmission mechanism 10 includes a plurality of shafts such as a drive shaft, a chain that links the shafts, a sprocket around which the chain is wound, and the like.

A battery 11 is provided mainly for the purpose of supplying electric power to the motor 5. The battery 11 is located above the motor 5 and fixed to the vehicle body frame 2.

### <2. Configuration of motor>

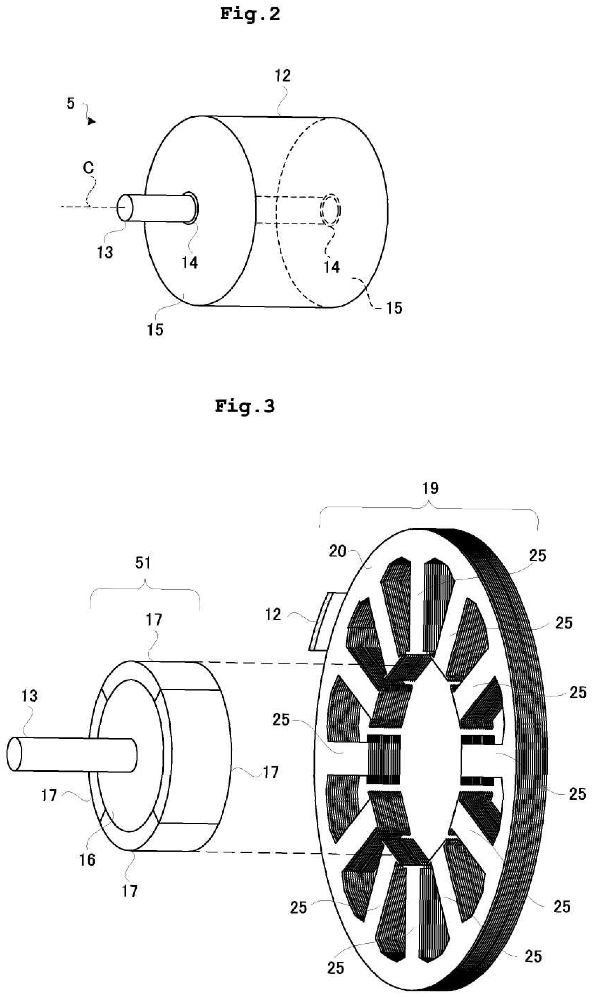

Fig. 2 schematically illustrates the motor 5 according to the present embodiment. As illustrated in Fig. 2, the motor 5 includes a cylindrical body 12 constituting an outer wall and disk-shaped members 15 that close both ends of the cylindrical body 12. The disk-shaped members 15 are provided with openings through which a rotation shaft 13 is inserted. Ring-shaped bearing mechanisms 14 are provided at positions where the disk-shaped members 15 and the rotation shaft 13 are located. The rotation shaft 13 is configured to rotate while being supported by the bearing mechanisms 14. The rotation shaft 13 corresponds to an output shaft in the present teaching.

Fig. 3 is an exploded perspective view illustrating an internal structure of the motor 5. The motor 5 includes a columnar rotor 51 fixed to the rotation shaft 13. The rotor 51 includes a cylindrical rotor core 16 surrounding the rotation shaft 13. The rotor core 16 is a part that serves as a path for magnetic force during operation of the motor 5. The rotor 51 is located at a position between the rotation shaft 13 and teeth 25 to be described later.

Four permanent magnets 17 are held by the rotor core 16. Each of the permanent magnets 17 has a shape obtained by bisecting a half-pipe shape by a plane including the rotation shaft 13. The four permanent magnets 17 are provided so as to surround the rotor core 16, and thus, the rotor core 16 is housed in a cylindrical member group including the four permanent magnets 17. A gap is formed between adjacent permanent magnets 17 among the four permanent magnets 17. The permanent magnets 17 and the rotor core 16 constitute the rotor 51 in the present embodiment. The permanent magnet 17 corresponds to a magnet in the present teaching.

The motor 5 in the present embodiment is a surface permanent magnet (SPM) motor, but the present teaching can also be applied to an interior permanent magnet (IPM).

Fig. 3 also illustrates a disk 20 constituting a stator of the motor 5 in the present embodiment. The disk 20 has a flat plate shape extending in a plane orthogonal to the rotation shaft 13, and has a circular outer shape. A plurality of the disks 20 are stacked without any gap in the extending direction of the rotation shaft 13 to constitute a stator core 19. The stator core 19 is fixed to the cylindrical body 12.

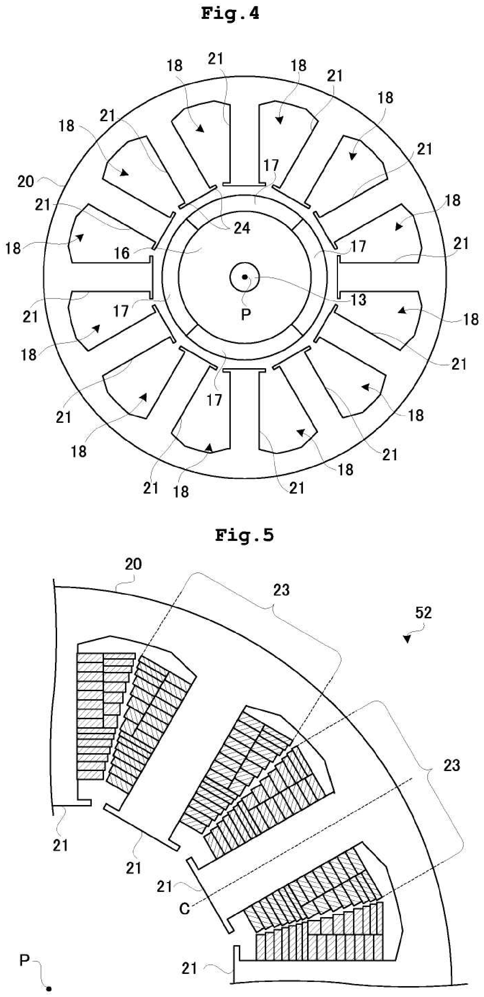

Fig. 4 is a plan view for describing the disk 20 in the present embodiment. The disk 20 includes a ring-shaped main body 22 and an extension member 21 extending radially from the main body 22 toward a center point P of the disk 20. A slot 18 in which the motor coil 23 is located is provided between the extension members 21 adjacent to each other.

As illustrated in Fig. 3, the disks 20 having the same shape are stacked in a direction in which the rotation shaft 13 extends. As a result, the extension members 21 of the disks 20 are stacked on one another to form the teeth 25 around which the motor coil 23 described later is wound. The teeth 25 form the slots 18 that have a fan shape extending outward from the rotation shaft 13 in plan view. The slot 18 corresponds to an arrangement space in the present teaching and a space having a fan shape in the present teaching.

A protrusion 24 protruding in the circumferential direction with respect to the center point P of the disk 20 is provided at the distal end of each of the extension members 21. The protrusion 24 includes a protrusion protruding in a counterclockwise direction with respect to the center point P of the disk 20 and a protrusion protruding in a clockwise direction. Accordingly, the extension member 21 has two protrusions 24.

### <3. Outline of motor coil>

Fig. 5 schematically illustrates the motor coil 23 according to the present embodiment. Fig. 5 illustrates the motor coil 23 cut in the same plane as the disk 20. The motor coil 23 is formed by winding a winding wire 26 made of, for example, a copper wire 23 times around the tooth 25. The motor coil 23 has a trapezoidal cross-section. That is, the upper base of the trapezoid is at the distal end of the tooth 25, and the lower base of the trapezoid is at the proximal end of the tooth 25. Therefore, the thickness of the motor coil 23 increases in the circumferential direction with distance from the center point P of the disk 20 in the radial direction. The tooth 25 extending in the radial direction from the center point P is located inside the motor coil 23.

The motor coil 23 is prepared for all the teeth 25. Since twelve teeth 25 are provided in the present embodiment, twelve motor coils 23 are provided. The motor coil 23 is attached to each of the teeth 25. More specifically, the motor coil 23 is a member attached around the tooth 25.

The motor coil 23 extends outward from the rotation shaft 13 in accordance with the shape of the slot 18 described above.

A gap is provided between the motor coils 23 adjacent to each other. Since the cross-section of the motor coil 23 in the present embodiment is trapezoidal, the gap between the motor coils 23 is devised to be as small as possible. As a result, the electric resistance of the motor coil 23 can be reduced.

The disk 20 and the motor coil 23 in Fig. 5 constitute a stator 52. That is, the stator 52 includes the stator core 19 described with reference to Fig. 3 and the motor coils 23 wound around the teeth 25 of the stator core 19. Therefore, the teeth 25 in the present embodiment constitute the stator 52.

Fig. 5 also illustrates the central axis C (coil central axis) of the motor coil 23. The central axis C of the motor coil 23 coincides with a direction in which a tooth 25 extends. The tooth 25 has a rectangular shape when cut in a direction orthogonal to the direction in which the tooth 25 extends. The central axis C passes through the center of the rectangle. The motor coil 23 extends along the central axis C. The motor coil 23 extends from one end toward the other end. One end of the motor coil 23 is an end closer to the rotation shaft 13, and the other end of the motor coil 23 is an end farther from the rotation shaft 13.

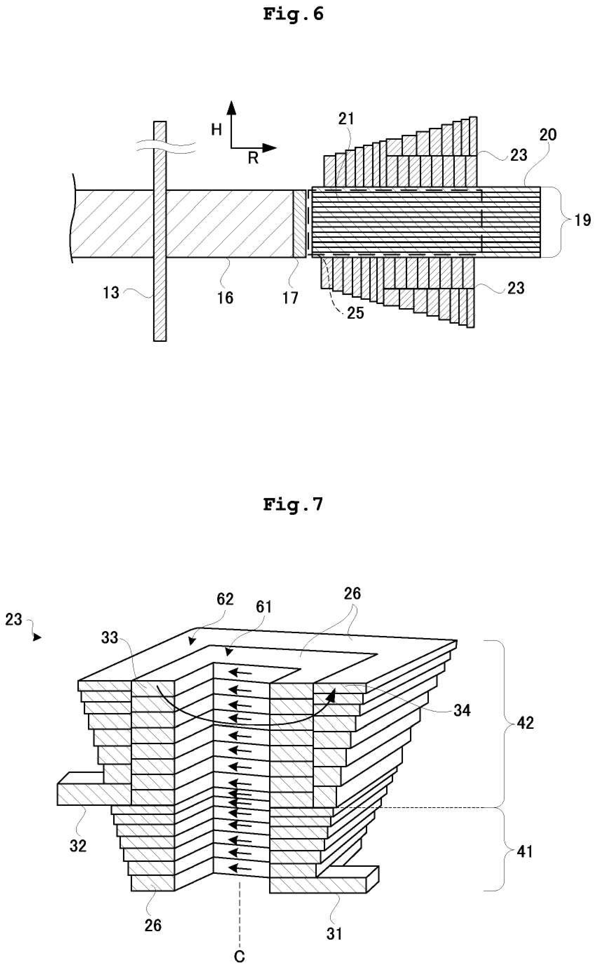

Fig. 6 is a cross-sectional view of the stator 52 according to the present teaching cut along a plane including the rotation shaft 13. As illustrated in Fig. 6, the motor coil 23 in the present embodiment has a trapezoidal cross-section. The upper base of the trapezoid is at the distal end of the tooth 25, and the lower base of the trapezoid is at the proximal end of the tooth 25. Therefore, the thickness of the motor coil 23 increases in the thickness direction (height direction) H with distance from the rotation shaft 13 in the radial direction R. The tooth 25 is located inside the motor coil 23. That is, the length of the motor coil 23 in the thickness direction H is the shortest at one end of the motor coil 23. The length of the motor coil 23 in the thickness direction H is the longest at the other end of the motor coil 23.

Fig. 7 is a cross-sectional perspective view for describing the motor coil 23 in the present embodiment. In Fig. 7, the tooth 25 that should be at the center of the motor coil 23 is removed. As illustrated in Fig. 7, the motor coil 23 in the present embodiment has a winding start position 31 and a winding end position 32. The winding wire 26 constituting the motor coil 23 starts to be wound from the position of one end of the motor coil 23, and is spirally wound up to the other end of the motor coil 23 with reference to the central axis C.

Thereafter, the winding wire 26 is wound toward one end of the motor coil 23 in a spiral shape with reference to the central axis C. The winding end position 32 is located at an intermediate position of the central axis C between one end and the other end of the motor coil 23.

As described above, the motor coil 23 according to the present embodiment includes a single layer portion 41 in which the winding wire 26 is wound in a single layer, and a multilayer portion 42 in which the winding wire 26 is wound in two stages. The single layer portion 41 starts at one end from the winding start position 31 described above and continues until immediately before the winding end position 32 described above. The multilayer portion 42 starts from the winding end position 32 and continues to the other end of the motor coil 23.

The winding wire 26 constituting the motor coil 23 is started to be wound from one end of the motor coil 23 and first wound up to the other end. Then, the winding wire 26 is turned back from the other end and wound toward the one end up to the winding end position 32. In this way, the motor coil 23 has partially a single layer structure and partially a multilayer structure.

An arrow illustrated in Fig. 7 indicates the winding direction of the motor coil 23. The winding wire 26 constituting the motor coil 23 is wound around the tooth 25 having a quadrangular prism shape. As a result, the winding wire 26 constituting the motor coil 23 covers the tooth 25 while being bent by 90° on each side constituting the tooth 25. The winding wire 26 is wound, for example, counterclockwise on the surface of the tooth 25 without a gap, and reaches the other end of the motor coil 23.

The winding wire 26 that has reached the other end of the motor coil 23 is wound so as to reach the winding end position 32 while covering a covered portion 61 of the motor coil 23.

As illustrated in Fig. 7, the winding wire 26 constituting the motor coil 23 is positioned outside a hollow quadrangular prism. The tooth 25 having a quadrangular prism shape is originally positioned in the hollow, but the tooth 25 is not illustrated in Fig. 7 for convenience of description.

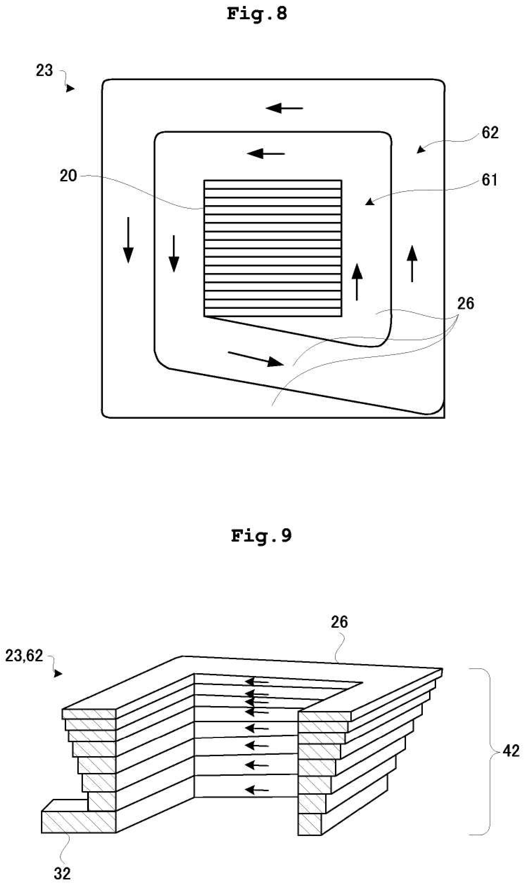

Fig. 8 is a plan view of the other end of the motor coil 23. As illustrated in Fig. 8, the winding wire 26 constituting the covered portion 61 of the motor coil 23 is continuous with the winding wire 26 constituting the second layer 62 of the motor coil 23. Therefore, the winding wire 26 constituting the covered portion 61 partially covers the covered portion 61 of the motor coil 23 and continues to the second layer 62 covering the covered portion 61 of the motor coil 23.

Fig. 9 is a perspective cross-sectional view illustrating the second layer 62 extracted from the multilayer portion 42 of the motor coil 23. An arrow illustrated in Fig. 9 indicates the winding direction of the motor coil 23. The winding wire 26 constituting the motor coil 23 is wound around the covered portion 61 of the motor coil 23 having a quadrangular prism shape. As a result, the winding wire 26 constituting the motor coil 23 covers the covered portion 61 while being bent by 90° on each side constituting the covered portion 61. The winding wire 26 is wound, for example, counterclockwise on the surface of the tooth 25 without a gap, and reaches the winding end position 32 of the motor coil 23.

### <4. Details of motor coil>

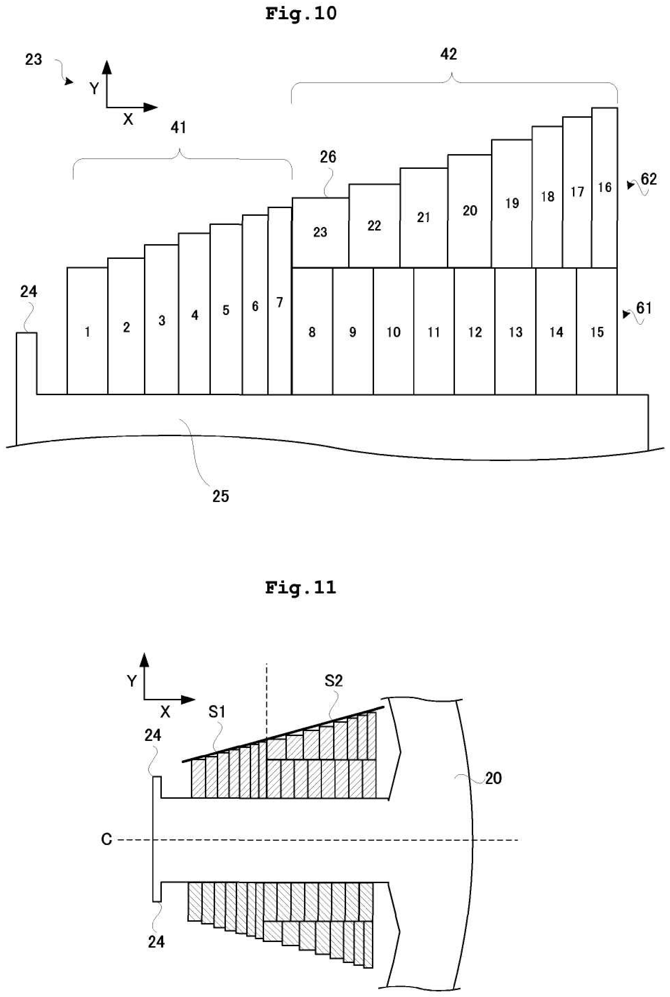

Fig. 10 is a cross-sectional view for describing details of the motor coil 23, and illustrates the motor coil 23 partially extracted from Fig. 5. The motor coil 23 is formed by winding a rectangular wire having a rectangular cross-section so as to cover the tooth 25 or the covered portion 61 of the motor coil 23 in the order from the first turn indicated by No. 1 to the 23rd turn indicated by No. 23 in Fig. 10. That is, the winding wire 26 has a plurality of rectangular cross-sections with regard to a plane that includes the coil central axis C of the motor coil 23, at least part of the plurality of rectangular cross-sections in that plane vary with regard to an extension direction of the coil central axis C, and the winding wire 26 is wound around the coil central axis C of the motor coil 23 in a first layer 41, 61 and a second layer 62 covering at least part of the first layer 41, 61.

The cross-sectional area of the rectangular wire constituting the motor coil 23 is always constant regardless of the cutting position as long as the cut surface includes the central axis C. Therefore, the cross-sections at the No. 1 turn to the No. 23 turn in Fig. 10 have the same area. Therefore, the cross-sectional area of the winding wire 26 has a predetermined number through the single layer portion 41, the covered portion 61, and the second layer 62.

The winding wire 26 constituting the motor coil 23 is seamless. The winding wire 26 does not have a portion welded or soldered in the middle.

The configuration of the single layer portion 41 will be described. The single layer portion 41 has the No. 1 to No. 7 turns. Therefore, the single layer portion 41 is formed by winding the winding wire 26 seven times.

The single layer portion 41 of the motor coil 23 in the present embodiment has a tapered shape with a height increasing in a winding direction (direction from the single layer portion 41 toward the multilayer portion 42: right direction) of the winding wire 26 that is wound. Therefore, the width of the motor coil 23 gradually increases as the motor coil 23 extends. The single layer portion 41 is formed by winding the winding wire 26 having a single-layer structure, so that the cross-sectional shape of the winding wire 26 (rectangular wire) gradually changes to an elongated shape as the winding wire 26 is wound. Since the cross-sectional area of the rectangular wire is constant, it can be said that the cross-sectional shape of such a rectangular wire changes due to a change in the aspect ratio of the rectangular wire. The winding wire 26 in the single layer portion 41 has a plurality of rectangular cross-sections that vary depending on the cutting position.

The rectangular wire will be described assuming that an extension direction of the tooth 25 is an extension direction X, and a direction orthogonal to the extension direction and the direction in which the rotation shaft 13 extends is a width direction Y. The extension direction X coincides with the left-right direction in Fig. 10, and the width direction Y coincides with the up-down direction in Fig. 10. In addition, the lateral direction X coincides with the direction in which the central axis C described above extends. The height direction is a direction into the page of Fig. 10 orthogonal to the extension direction and the width direction.

The cross-section at the No. 1 turn in the single layer portion 41 has the smallest aspect ratio (defined as a length-to-width value in the present specification). The aspect ratio gradually increases as the number increases, and the cross-section at the No. 7 turn in the single layer portion 41 has the largest aspect ratio. At any turn, the aspect ratio is 1 or more. That is, the cross sections at all turns of the single layer portion 41 are vertically long. Therefore, the single layer portion 41 in the present embodiment forms an edgewise coil. The winding wire 26 in the single layer portion is wound edgewise. In addition, the length (extension length) of the winding wire 26 in the direction of the central axis C (extension direction X) gradually decreases as the motor coil 23 extends. Therefore, the lengths (lengths in the width direction Y) of the long sides of the cross-sections of the winding wire at the turns in the single layer portion 41 gradually increase as the motor coil 23 extends along the central axis C. This is because the cross-sectional area of the winding wire 26 is constant regardless of the position of the winding wire 26. That is, length of the winding wire 26 of at least part of the first layer 41, 61 and the second layer 62 gradually decreases in the extension direction of the coil central axis C as the length of the motor coil 23 gradually increases. Lengths of long sides of the rectangular cross-sections of the second layer 62 in the plane that includes the coil central axis C in extension direction of the coil central axis C as the width of the motor coil 23 gradually increases.

The configuration of the multilayer portion 42 will be described. The multilayer portion 42 includes a covered portion 61 formed by winding the winding wire 26 in a direction from the single layer portion 41 toward the multilayer portion 42 (right direction in Fig. 10) and a second layer formed by winding the winding wire 26 in a direction from the multilayer portion 42 toward the single layer portion 41 (left direction in Fig. 10). The covered portion 61 is formed by the No. 8 to No. 15 turns, and the second layer 62 is formed by the No. 16 to No. 23 turns. As described above, the winding wire 26 includes the covered portion 61 and the second layer 62 covering the covered portion 61.

The configuration of the covered portion 61 will be described. The winding wire in the covered portion 61 has a rectangular cross-section. The covered portion 61 has eight turns that are the same in cross-sectional aspect ratio. Therefore, the aspect ratio is constant at all turns in this portion. In other words, the rectangular cross-sections of the winding wire in the covered portion 61 have the same shape in the covered portion 61. The vertical length (width from the first layer 61, that is, the covered portion 61, to the second layer 62) of the covered portion 61 is constant. That is, a width of the winding wire 26 of the covered portion 61 of the first layer 41, 61 is constant in the extension direction of the coil central axis C, preferably the rectangular cross-sections of the winding wire 26 of the covered portion 61 in the plane that includes the coil central axis C are identical in shape.

The aspect ratio at any turn in the covered portion 61 is 1 or more. That is, the cross-sections at all turns of the covered portion 61 are vertically long. Therefore, the covered portion 61 in the present embodiment forms an edgewise coil. The winding wire 26 in the covered portion 61 is wound edgewise.

The single layer portion 41 and the covered portion 61 correspond to a first layer in the present teaching. Each of them is a portion in contact with the tooth 25. The single layer portion 41 is a portion that is not covered with the second layer 62 and is exposed.

The second layer 62 will be described. In the second layer 62, the longitudinal dimension of the cross-section of the rectangular wire gradually decreases from the winding start to the winding end. The second layer 62 of the motor coil 23 in the present embodiment has a tapered shape that is decreased in thickness in a winding direction (direction from the multilayer portion 42 toward the single layer portion 41: left direction) of the winding wire 26 that is wound. Therefore, the width of the motor coil 23 gradually increases as the motor coil 23 extends. The second layer 62 is formed by winding the winding wire 26 having a single-layer structure, so that the cross-sectional shape of the rectangular wire gradually changes to be thin as the winding wire 26 is wound. Since the cross-sectional area of the rectangular wire is constant, it can be said that the cross-sectional shape of such a rectangular wire changes due to a change in the aspect ratio of the rectangular wire. The winding wire 26 in the second layer 62 has a plurality of rectangular cross-sections that vary depending on the cutting position.

The cross-section at the No. 16 turn in the second layer 62 has the largest aspect ratio. The aspect ratio gradually decreases as the number increases, and the cross-section at the No. 23 turn that is the winding end has the smallest aspect ratio. At any turn, the aspect ratio is 1 or more. That is, the cross-sections at all turns of the second layer 62 are vertically long. Therefore, the second layer 62 in the present embodiment forms an edgewise coil. The winding wire 26 in the second layer 62 is wound edgewise. In addition, the length of the winding wire 26 in the direction of the central axis C (extension direction X) gradually decreases as the motor coil 23 extends. Therefore, the lengths (lengths in the width direction Y) of the long sides of the cross-sections at the turns in the second layer 62 gradually increase as the motor coil 23 extends along the central axis C. This is because the cross-sectional area of the winding wire 26 is constant regardless of the position of the winding wire 26.

### <5. Inclined surface>

The motor coil 23 in the present embodiment has a shape similar to a quadrangular pyramid, and thus, has an inclined surface inclined with respect to the central axis C. Fig. 11 illustrates the configuration of the inclined surface.

First, a first inclined surface S1 of the single layer portion 41 will be described. The first inclined surface S1 is defined by a surface formed by connecting the tops of the winding wire 26 in the height direction H (up-down direction in Fig. 11) over the turns. The first inclined surface S1 is inclined with respect to the central axis C.

Next, a second inclined surface S2 in the second layer 62 of the multilayer portion 42 will be described. The second inclined surface S2 is defined by a surface formed by connecting the tops of the winding wire 26 in the height direction H (up-down direction in Fig. 11) over the turns. The second inclined surface S2 is inclined with respect to the central axis C.

The first inclined surface S1 and the second inclined surface S2 are flush with each other. Therefore, the second layer 62 forms the second inclined surface that is flush with the first inclined surface S1.

### <6. Effects of the present invention>

The motor coil 23 described above includes a winding wire 26 wound edgewise, the winding wire 26 has a plurality of rectangular cross-sections that vary depending on a cutting position, and the winding wire 26 has a first layer and a second layer 62 covering the first layer. With this configuration, it is not necessary to constitute the motor coil 23 from the winding wire 26 having a single-layer structure, and the motor coil 23 can be manufactured without excessively flattening the shape of the winding wire 26 when the winding wire 26 is wound edgewise. Therefore, according to the present teaching, a motor coil that is easy to manufacture can be provided by facilitating edgewise winding.

The motor coil 23 partially has a multilayer structure, whereby the motor coil 23 can be easily manufactured. The edgewise coil is difficult to manufacture as the aspect ratio of a rectangular wire increases. If the motor coil 23 is entirely constituted by a single layer, the aspect ratio of the rectangular wire becomes extremely large at the other end of the motor coil 23. The motor coil 23 according to the present embodiment partially has a multilayer structure, whereby it is possible to suppress an increase in the aspect ratio of the rectangular wire. This is because the vertical dimension is divided into the first layer 61 and the second layer 62 in the multilayer portion of the motor coil 23. If each layer is constituted by individual turns, the aspect ratio at each turn can be reduced. Therefore, according to the present embodiment, the motor coil 23 can be easily manufactured.

With the above configuration, the width of the motor coil 23 gradually increases as the motor coil 23 extends. With this configuration, in the motor 5, the motor coil 23 can be easily accommodated in the arrangement space of the motor coil 23 having a fan-shaped cross-section with a high occupancy rate.

With the above configuration, the length of the winding wire 26 in the direction of the central axis C gradually decreases as the motor coil 23 extends. With this configuration, the height of the winding wire 26 can be set high. As described above, according to the present configuration, it is easy to wind the winding wire 26 edgewise with the rectangular cross-sectional shape being variable.

With the above configuration, the lengths of the long sides of the cross-sections in the second layer 62 gradually increase as the motor coil 23 extends. With this configuration, it is easy to wind the winding wire 26 edgewise with the rectangular cross-sectional shape being variable.

With the above configuration, the winding wire 26 is seamless. With this configuration, the motor coil 23 that is easy to manufacture can be provided.

With the above configuration, the cross-sectional area of the winding wire 26 has a predetermined number through the first layer and the second layer 62. With such a configuration, the electric resistance of the entire motor coil 23 is reduced, and a high-output motor can be obtained.

With the above configuration, the winding wire 26 is located outside the hollow quadrangular prism. With this configuration, the motor coil 23 can be easily attached to an iron core of the quadrangular prism included in the motor 5.

With the above configuration, the first layer includes the exposed single layer portion 41 and the covered portion 61 covered with the second layer 62. With this configuration, the length of the motor coil 23 can be greatly changed depending on the part of the motor coil 23, whereby the motor coil 23 according to the present teaching can be applied to more motors 5. That is, the motor coil can be set to be gradually thinner by providing the multilayer portion.

With the above configuration, the rectangular cross-sections are identical in shape in the covered portion 61, and the width from the first layer to the second layer 62 in the covered portion 61 is constant. With this configuration, the second layer 62 is wound around the flat covered portion 61 when the second layer 62 is wound so as to overlap the covered portion 61, so that the manufacturing of the second layer 62 is facilitated. With this configuration, the motor coil 23 having a simple configuration and easy to manufacture can be provided.

With the above configuration, the single layer portion 41 forms the first inclined surface S1 inclined with respect to the central axis C of the motor coil 23, and the second layer 62 forms the second inclined surface S2 flush with the first inclined surface S1. With this configuration, it is possible to provide the motor coil 23 that looks as if the winding wire is apparently wound in the same manner, although the motor coil 23 has the single layer portion 41 having only the first layer and the portion having the second layer 62 on the first layer. As a result, it is possible to achieve a configuration equivalent to a motor coil 23 constituted by a single layer, although the configuration also has the second layer 62.

With the above configuration, the rotation shaft 13, the teeth 25 surrounding the rotation shaft 13, and the motor coil 23 attached to each of the teeth 25 are provided, the motor coil 23 includes the winding wire 26 wound edgewise, the winding wire 26 has the first layer and the second layer 62 covering the first layer, and the winding wire 26 has a plurality of rectangular cross-sections that vary depending on a cutting position. As described above, the present teaching is easily applied to a motor 5 including the rotation shaft 13, the teeth 25 surrounding the rotation shaft 13, and the motor coil 23 attached to each of the teeth 25. Therefore, according to the present teaching, a motor that is easy to manufacture can be provided by facilitating edgewise winding.

With the above configuration, the rotor 51 is provided at a position between the rotation shaft 13 and the teeth 25, the rotor 51 includes the rotor core 16 fixed to the rotation shaft 13 and the permanent magnet 17 held by the rotor core 16, and the teeth 25 constitute the stator 52. As described above, the present teaching can be applied to the motor 5 having the teeth 25 as the stator 52. That is, according to the present teaching, a stator that is easy to manufacture can be provided by facilitating edgewise winding.

With the above configuration, the teeth 25 form the slot 18 that has a fan shape extending outward from the rotation shaft 13 in plan view, and the motor coil 23 extends outward from the rotation shaft 13 in accordance with the shape of the slot 18. With this configuration, the motor 5 having a high occupancy rate in the slot 18 and a high output can be obtained.

According to the present teaching, it is possible to provide the motorcycle 1 that has a high output and is easy to manufacture.

### <7. Modification>

### <First modification>

The multilayer portion 42 in the above-described embodiment has a two-stage coil. Alternatively, the multilayer portion may have three or more stages.

### <Second modification>

The above-described embodiment has described an inner-rotor motor 5. Alternatively, an embodiment can be provided with an outer-rotor motor.

## Claims

1. A motor coil (23) comprising
a winding wire (26) wound edgewise, wherein
the winding wire (26) has a plurality of rectangular cross-sections that vary depending on a cutting position, and
the winding wire (26) has a first layer (41, 61) and a second layer (62) covering the first layer (41, 61).

2. The motor coil (23) according to claim 1, wherein a width of the motor coil (23) gradually increases as the motor coil (23) extends with regard to the extension direction of the coil central axis (C).

3. The motor coil (23) according to claim 1 or 2, wherein a length of the winding wire (26) in a direction of the coil central axis (C) gradually decreases as the motor coil (23) extends.

4. The motor coil (23) according to at least one of the claims 1 to 3, wherein lengths of long sides of the rectangular cross-sections in the second layer (62) gradually increase as the motor coil (23) extends.

5. The motor coil (23) according to at least one of the claims 1 to 4, wherein the winding wire (26) is seamless.

6. The motor coil (23) according to at least one of the claims 1 to 5, wherein a cross-sectional area of the winding wire (26) has a predetermined number through the first layer and the second layer (62).

7. The motor coil (23) according to at least one of the claims 1 to 6, wherein the winding wire (26) is positioned outside a hollow quadrangular prism.

8. The motor coil (23) according to at least one of the claims 1 to 7, wherein the first layer includes a single layer portion (41) that is exposed and a covered portion (61) covered with the second layer (62).

9. The motor coil (23) according to claim 8, wherein the rectangular cross-sections are identical in shape in the covered portion (61), and
a width of the covered portion (61) from the first layer to the second layer (62) is constant.

10. The motor coil (23) according to claim 8 or 9, wherein the single layer portion (41) forms a first inclined surface (S1) inclined with respect to the coil central axis (C), and the second layer (62) forms a second inclined surface (S2) flush with the first inclined surface (S1).

11. The motor coil (23) according at least one of the claims 1 to 10, wherein winding wire (26) wound around a coil central axis (C) of the motor coil (23),
the winding wire (26) has a plurality of rectangular cross-sections with regard to a plane that includes the coil central axis (C) of the motor coil (23), at least part of the plurality of rectangular cross-sections in that plane vary with regard to an extension direction of the coil central axis (C), and
the winding wire (26) is wound around the coil central axis (C) of the motor coil (23) in a first layer (41, 61) and a second layer (62) covering at least part of the first layer (41, 61).

12. A motor (5) comprising:
an output shaft (13);
teeth (25) surrounding the output shaft (13); and
a motor coil (23), preferably according to at least one of the claims 1 to 11, attached to each of the teeth (25), wherein
the motor coil (23) includes a winding wire (26) wound edgewise,
the winding wire (26) includes a first layer and a second layer (62) covering the first layer, and
the winding wire (26) has a plurality of rectangular cross-sections that vary depending on a cutting position.

13. The motor (5) according to claim 12, further comprising
a rotor (51) provided at a position between the output shaft and the teeth (25), wherein the rotor (51) includes
a rotor core (16) fixed to the output shaft (13) and
a magnet (17) held by the rotor core (16), and
the teeth (25) constitute a stator (52).

14. The motor (5) according to claim 12 or 13, wherein the teeth (25) form a space that has a fan shape extending outward from the output shaft (13) in plan view, and
the motor coil (23) extends outward from the output shaft (23) in accordance with the shape of the space.

15. A straddle type vehicle comprising the motor (5) according to at least one of the claims 12 to 14.
